# EUROPEAN PATENT SPECIFICATION

(11) **EP 0 805 363 B1**
(45) Date of publication and mention of the grant of the patent: **05.09.2001**
(21) Application number: 96830240.6
(22) Date of filing: 29.04.1996
(51) Int. Cl.: G02B 1/04, C08K 3/04, G02B 5/23

(54) **Photochromatic polymeric material for lenses and screens with filtering properties for near IR radiation**
Photochrome Polymermaterialien für Linsen und Schirme mit filternden Eigenschaften im nahen IR
Matériau polymérique photochromique pour lentilles et écrans à propriétés filtrantes dans le proche IR

(43) Date of publication of application: 05.11.1997
(73) Proprietor: VISUAL OPTICAL SYSTEM di Casati Carla & C. s.a.s., 21100 Varese (IT)
(72) Inventor: Rossi, Maurizio, 21050 Bolladello di Cairate (IT)
(74) Representative: Pellegri, Alberto

(56) References cited:
- EP-A- 0 331 217
- EP-A- 0 595 424
- WO-A-95/04086
- GB-A- 1 275 354
- IT-B- 1 249 483
- US-A- 5 312 868

## Description

The present invention relates in general to thermosetting polymeric materials for screens, plates and/or lenses, visors and the like having photochromic properties.

The usefulness of photochromic properties of materials used for fabricating lenses, sun glasses, screens, visors and the like is well known and highly regarded. In the case of common polymeric matrixes used in this field, for example optically clear plastics such as polyacrylates, polymethacrylates, cellulose acetate, cellulose triacetate, cellulose acetate propionate, cellulose acetate butyrate, poly(vinyl-acetate), poly(vinylalcohol), polyester resins and polymers of diethylenglycol bis (allyl carbonate), is common practice to confer photochromic properties by adding to the mixture of the monomer and of the activator of polymerization, from about 0,1 to about 1,5% by weight of a photochromic compound commonly belonging to the class consisting of spirooxazine and spiropyranols such as:
5-acetoxy-3,3-difenil-3H-naphto(2,1-b)pyranol;
8-methoxy-3,3-difenil-3H-naphto(2,1-b)pyranol;
spiro(5-methoxy-1,3,3-trimethylindoline)-2-3'-3H-9'-methoxy-naphto(2,1-b)oxazine;
spiro(1,3,3-trimethylindoline)-2,3'-3H-9'-methoxy-6'-(pyrrolid-1-il)-naphto(2,1-b)oxazine;
spiro(1,3,3-trimethylindoline)-2,3',3H-5'-(-methyl-oxadiaze-2-il)-naphto(2,1-b)oxazine;
2,2 difenil-2H-naphto(1,2-b)pyranol;
spiroadamantanfulgide;
or a photochromic compound of the type described in the US Patent No. 4,342,668 or in the US Patent No. 3,562,172 or similar.

The photochromic compounds marketed under the trademark VARIACROL® (a mark of GREAT LAKES corporation) and in particular the types: BLUE A, BLUE D, RED/PNO and YELLOW L, and the photochromic compounds marketed under the trademark REVERSACOL® (a mark of ROBINSON Corporation) represent other particularly suited, specific photochromic compounds.

Dispersion in the polymeric mass of these photochromic compounds which, under the effect of UV radiations, are capable of reversibly break a bond of their molecule, allowing the molecule to rotate to orient itself toward the energy source thus producing an enhancement of the planar structure of these coloring molecules that reduce the material transparency, offers undisputed advantages as compared to the alternative technique of absorbing and fixing such photochromic molecules onto the surface, eventually purposely sensitized, of an already polymerized lens or screen.

On the other hand, the addition of a photochromic coloring compound or compounds in the monomeric mixture, prior to polymerization, somehow seriously limits the ability of promoting a high degree of hardening of the polymer by increasing the concentration of compounds that activate or promote polymerization because of the insurgence or a marked side-effect, in terms of an increased loss of homogeneity of the photochromic characteristics and of their general decline.

This drawback is due to the fact that these promoters of polymerization are generally strong oxidizing agents that react with the photochromic compounds by partially or totally destroying their molecular structure thus inhibiting their photochromic characteristics.

The document WO 95/04086 discloses a process of preparation of a photochromic material for lenses according to which by using mixtures of photochromic coloring compounds of which at least one of them is not a spirooxazine, that is to say by using a mixture of a spirooxazine and of another photochromic colorant such as for instance a spiropyranol, an indolizine or a fulgimide, it is possible to increment the dose of the polymerization activator or promoter compound so to produce a polymeric material having satisfying hardness properties, that is an appreciable resistance to abrasion.

US-A-5,312,868 describes a transparent thermosetting covering sheet of a thermosetting resin composition including a reactive acrylic resin containing a plurality of at least one kind of functional groups. Photochromic compounds and/or solid particles may be admixed to the resin composition before hardening.

EP-A-0 595 424 describes a polymerizable polymer composition of a poly (allyl carbonate) including an organic dye and/or an organic photochromic compound.

EP-A-0 331 217 discloses a photochromic composition suitable for manufacturing lenses wherein a photochromic compound is incorporated into a polymer.

State of the art technology requires the use of relatively critical formulations that ensure the best compromise between the requisite of achieving a sufficient hardness and abrasion resistance together with good photochromic characteristics. However, according to that process, a more or less accentuated deficit of either one or the other property remains.

On the other hand, a polymeric material, having filtering properties for the near-IR range of the spectrum is known and such a material is particularly indicated for fabricating sun glasses and visors for protection from peculiar uncomforts or irritations caused by prolonged exposure to strong luminous sources or sun light and that are generally attributed to an excessive exposure of the eyes to infrared radiation.

This particular optical material, as well as the process of its preparation, are described in the Italian Patent Application No. VA/91/A/0017, filed on June 12, 1991, in the name of the present applicant, now Patent No. 1249483.

According to that technique, a colloidal suspension of particles of a carbon black having functional groups chemically linked to the surface of the carbon particles is dispersed in the liquid monomer mass before activating it and proceeding to its polymerization.

It has now been found that it is possible to produce a polymeric photochromic transparent material having outstanding characteristics of homogeneity of photochromic properties together with excellent hardness and abrasion resistance properties by exploiting an unsuspected and decisive function as a promoter of homogeneity of the photochromic characteristics of the polymerized article of an addition in the monomeric mass of colloidal particles of carbon black containing a number of functional groups chemically linked thereto.

The resulting polymerized material, combines a basic filtering property of the near-IR radiation, excellent photochromic performances with an outstandingly higher homogeneity than those obtained with comparable samples prepared without adding carbon black.

What is noticeable is a remarkable synergic action of the dispersed particles of carbon black and of the molecules of the photochromic additive(s).

In the first place, an exceptional uniformity of the photochromic characteristics of the material as casted or shaped into a lens or screen is observed.

Another surprising effect of the association of a loading of the mixture with carbon black particles and a loading of the mixture with a photochromic compound or compounds is the lessening of the usually strict limitations imposed by the type and dose of the photochromic compound on the permissible maximum amount of the polymerization promoter compound that can be employed without causing excessive disuniformities in the finished product, thus allowing to obtain considerably hard and abrasion resistant polymers without inducing a dishomogeneity of photochromic characteristics as a trade-off.

In practice, the presence of carbon particles appears to untie homogeneity of photochromic properties from the dose of the polymerization activator used, suggesting an effect of the functional groups that are chemically bounded to the surface of the carbon particles in establishing "electrostatic" bonds with the functional groups of the photochromic molecules, and of the polymer, thus promoting a "persistency" of the homogeneity of the dispersion of the photochromic molecules in the monomer mass, despite the addition of the polymerization promoter.

Still, another important result of associating carbon particles and photochromic compound or compounds is an enhanced reversibility of the photochromic effect, which is verified by a fast return of the material to its base color when the exciting cause ceases (the cause being either UV radiation or heat).

This aspect and the fact that lenses possess a base coloration (or background) basically conferred to them by the carbon particles dispersed in the polymeric matrix and optionally also by small amounts of specific colorant, make sun glasses fabricated with this type of material, perfectly suited to be worn indoors. Indeed, they maintain an appreciable "cosmetic" function and continuous eye protection from strong luminous sources, by exerting a beneficial filtering action against near-IR radiations.

The transparent material of the invention is defined in claim.

The polymeric matrix may be any of the optically clear plastics already cited,

being the class of thermosetting polymers of allyl diglycol carbonate or its variations a preferred polymeric material.

According to an important embodiment, the monomeric matrix though basically classifiable as a monomeric matrix of allyl diglycol carbonate, consists of a mixture of modified forms of the basic monomer, such as for example allyl (bis) diglycol carbonate and allyl (tris) diglycol carbonate eventually also in conjunction with other monomeric compounds.

The utilization of commercially available modified forms of the monomer (bis, tris, ...) provides for a monomeric "matrix" (in which the carbon particles are dispersed) that presents accentuated ionic properties or in other words marked polar characteristics.

A monomeric matrix with enhanced polar characteristics seems to support a synergistic phenomenon between the large number of polar groups chemically bonded to the dyeing carbon particles and the photochromic compound that enhances at first the chemical-physical dispersion mechanism and after an anchoring mechanism during the reticulation of the polymer that prevents clustering effects of the dispersed additives.

One of the preferred materials is a mixture of modified diethylenglycol bis (allyl carbonate), commercially referred to as RAV 7 HI and RAV 7 MC, produced and marketed by GREAT LAKES Chemical Italia s.r.l. and described in the Italian Patent Application No. 20718 A/85 of the same firm, corresponding to the US Patent No. 4,812,545, and in the European Patent No. EP-A-595424-A2.

The usable photochromic compounds may be one or more compounds of the groups of spirooxazine and spiropyranols, such as for example:
5-acetoxy-3,3-difenil-3H-naphto(2,1-b)pyranol;
8-methoxy-3,3-difenil-3H-naphto(2,1-b)pyranol;
spiro(5-methoxy-1,3,3-trimethylindoline)-2-3'-3H-9'-methoxy-naphto(2,1-b)oxazine;
spiro(1,3,3-trimethylindoline)-2,3'-3H-9'-methoxy-6'-(pyrrolid-1-il)-naphto(2,1-b)oxazine;
spiro(1,3,3-trimethylindoline)-2,3',3H-5'-(-methyl-oxadiaze-2-il)-naphto(2,1-b)oxazine;
2,2 difenil-2H-naphto(1,2-b)pyranol;
spiroadamantanfulgide.

The photochromic compounds commercialized under the VARIACROL® mark by GREAT LAKES and in particular the types: BLUE A, BLUE D, RED/PNO and YELLOW L, and the photochromic compounds marketed under the REVERSACOL® mark by ROBINSON represent other specific and particularly suitable photochromic compounds.

These compounds have functional groups that might establish "electrostatic" bonds with the host polymeric matrix. These very same functional groups might also tend to establish similar bonds even or preferably with the functional groups, chemically bonded to the surface of the colloidal carbon particles and generally belonging to the class consisting of the carboxylic, lactonic, phenolic and carbonylic groups. The amount of particles of carbon black dispersed in the polymer is between about 0,001% and about 0,003% by weight referring to the whole mixture.

The photochromic compound or compounds, when not pre-loaded, are added in an amount comprised between about 0,05% and about 0,2% of the whole weight to the monomeric mixture that already contains said percentage of colloidal particles of carbon black.

Once homogenization is completed, a solution of an activator of polymerization is added to the mixture, commonly a compound belonging to the class of perchetali, for example a 50% by weight solution of phthalate of 1,1di(tert-butyl-peroxy)3,3,5-trimethyl-ciclohexane in a weight ratio of about 3% to 4% of said solution and of the mixture.

After carrying out a further homogenization process at a temperature of about 50°C, under natural light, for a sufficiently long period of time, usually several hours, the mixture is transferred in refluxed molds under thermostatic conditions so to increase the temperature up to a maximum of about 95°C in several hours, thus ensuring a complete polymerization.

The various aspects and advantages of the invention will become even more evident through the following description of some important embodiments and of the characteristics observed in various samples and compared with the characteristics of samples produced according to prior techniques.
**Figure 1** shows the transmittance characteristics of a reference transparent polymeric material and of the same material containing a dye of colloidal particles of carbon black;
**Figure 2** shows the transmittance characteristics of a material containing colloidal particles of carbon black and a photochromic compound according to the present invention;
**Figures 3A, 3B, 3C** and **3D** show optical characteristics of a reference photochromic material;
**Figures 4A, 4B, 4C** and **4D** show optical characteristics of a photochromic material of the invention containing also colloidal particles of carbon black;
**Figures 5A, 5B, 5C** and **5D** show the characteristics of a well known, acrylic base photochromic material;
**Figures 6A, 6B, 6C** and **6D** show the characteristics of a known photochromic material.

### EXAMPLE 1

To 100 grams of a commercial monomeric base of a modified diethylenglycol bis(allyl carbonate), called RAV 7 HI and RAV 7 MC, produced by GREAT LAKES, were dissolved 40 grams of a 0,25% solution, in the same monomeric base, of the photochromic compound VARIACROL® BLUE A also produced by GREAT LAKES, corresponding to approximately 0,1% by weight of the weight of the starting polymeric base, and 10 grams of a colloidal suspension of a dye consisting of oxidized carbon black, commercially known as FW200. This carbon black dye is produced by a gas process by the German company Degussa, and belongs to the HCCII class. It contains 15,09% by weight of oxygen, and has 1130 microequivalent/grams (of carbon) of carboxylic groups, 367 microequivalent/grams (of carbon) of lactonic groups, 441 microequivalent/grams of phenolic groups and 312 microequivalents/grams of carbonylic groups. The content of carbon black particles corresponded to about 0,0025% by weight of the whole weight of the mixture.

The mixture was homogenized by agitation and heated in a thermostatic bath at 40°C for an hour and subsequently was transferred in a ultrasonic bath while keeping the temperature at 55°C for 12 hours.

Thereafter the mixture was cooled down to 20°C and bükner filtered using a filter paper SeS No. 30012.

The filtered mixture was placed again in the ultrasonic bath and to it was added a 5% by weight of 1,1di(tert-butyl-peroxy)3,3,5-trimethyl-ciclohexane, diluted to 50% with a plasticizing compound as phlegmatizer.

The mixture was subjected to ultrasonic monogeneration for 3 hours at 40°C and then cooled down to 20°C. With this mixture lenses and visors were casted on molds treated in "bain marie" for 18 hours while gradually increasing the temperature from 65°C to 95°C for polymerizing the material.

The produced lenses and visors were 1,8±0,2 mm thick.

The lenses had a spherical power of lower than ±0,6 dpt, an astigmatism lower than 0,06 and a prismatic power lower than 0,12 dpt and therefore could be classified as lenses of optical class 1, in compliance with DIN 4646 standards.

### COMPARATIVE EXAMPLE 1

By way of comparison, lenses were produced with the same polymeric base used in example 1 without photochromic additives nor a dye of oxidized carbon black

### COMPARATIVE EXAMPLE 2

With the same procedure of the example 1, reference sample of lenses were produced with the same quantity and type of photochromic compound without adding the dye of colloidal particles of oxidized carbon black.

The different samples thus realized were subjected to IR spectroscopy.

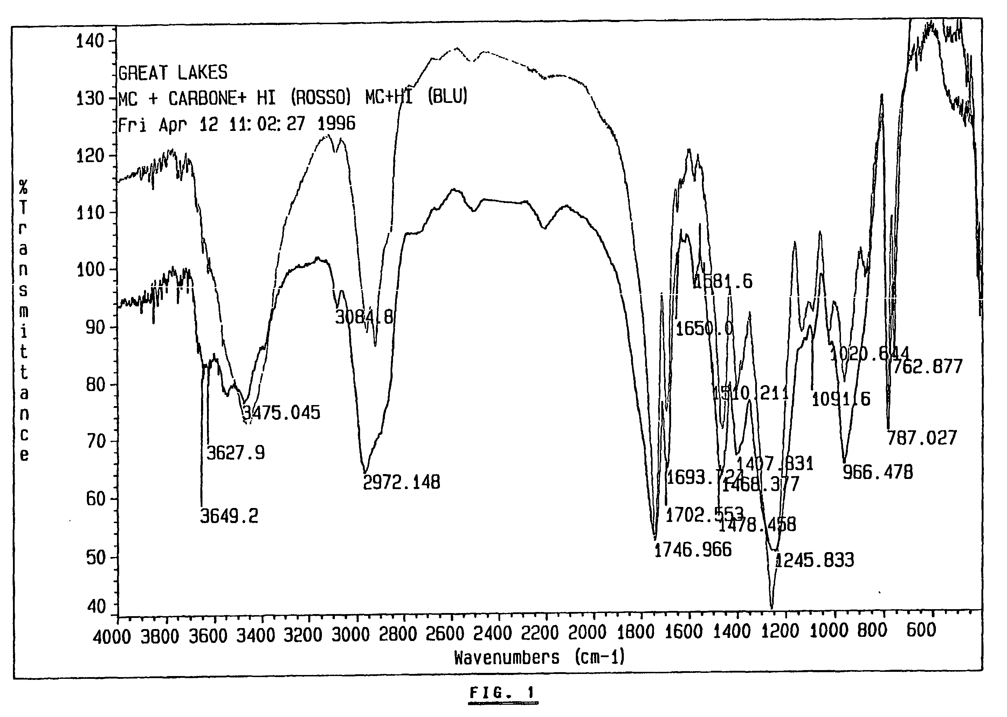

Fig. 1 depicts an infrared spectrum of first reference samples of the pure polymer without any optically active additive and of second reference samples of the polymer added with a dye of colloidal particles of oxidized carbon black.

As shown in Fig. 1, the incorporation of the carbon black dye does not modify the optical transconductance characteristics of the polymer apart from markedly decreasing the transmittance in the infrared.

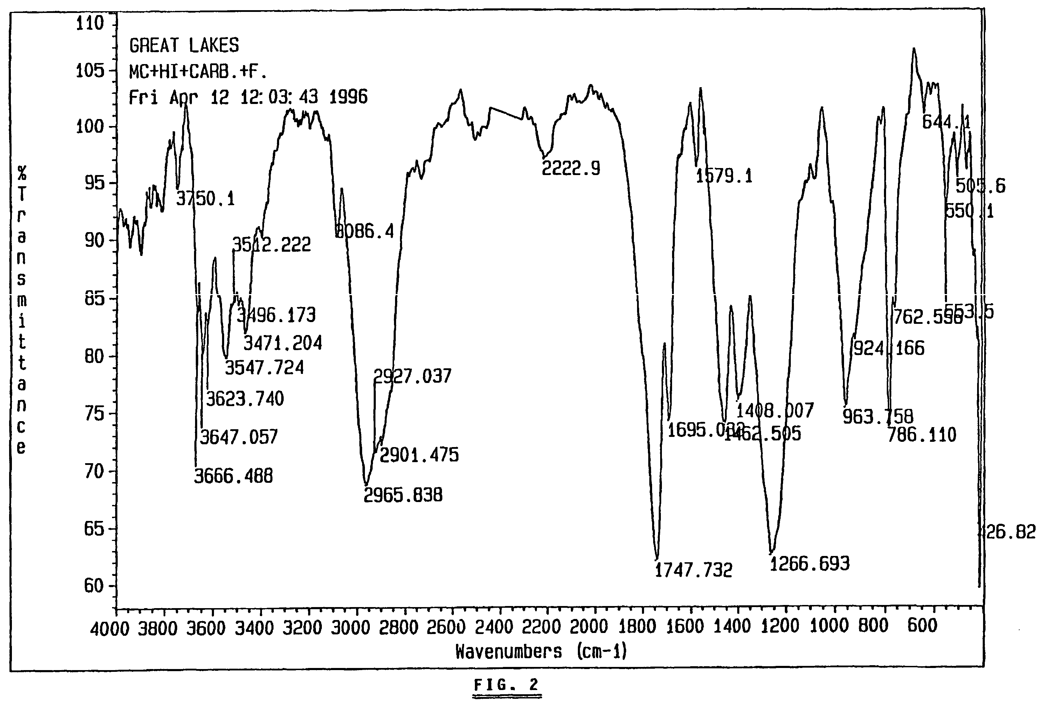

Fig. 2 shows a similar spectrum of samples realized according to the present invention, that is containing a dye of oxidized carbon black particles and the photochromic compound.

As observed, differently from the essentially non-dispersing but solely absorbent effect caused by adding the dye of colloidal particles of oxidized carbon black, the addition of a photochromic compound modifies the spectrum, markedly in the near-IR.

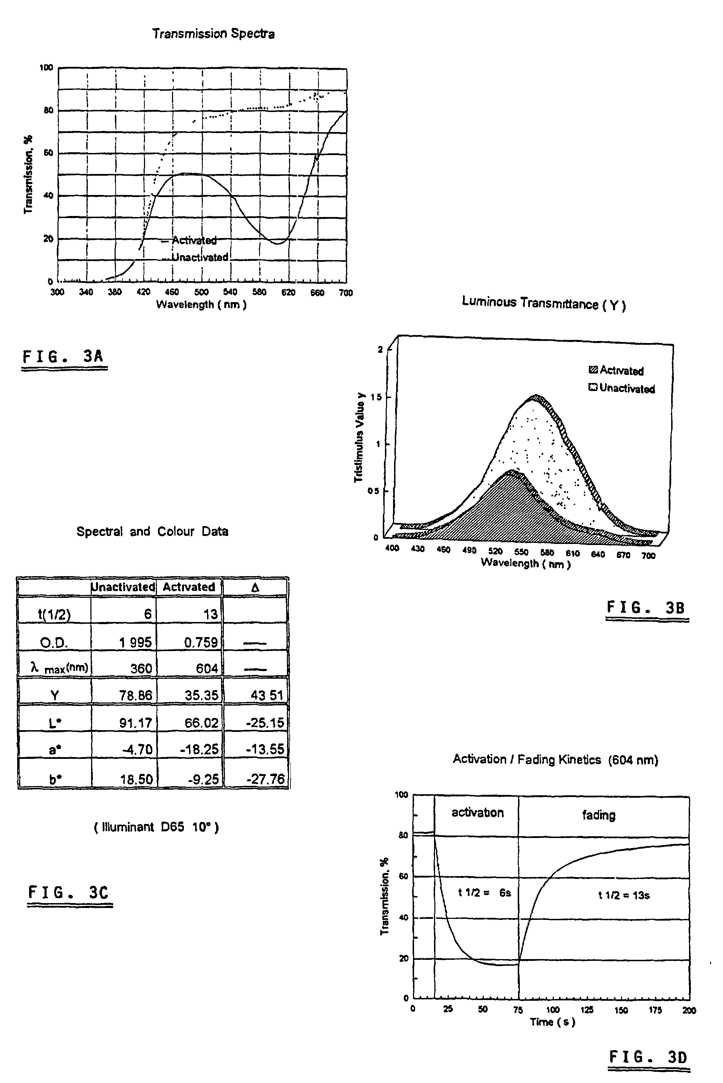

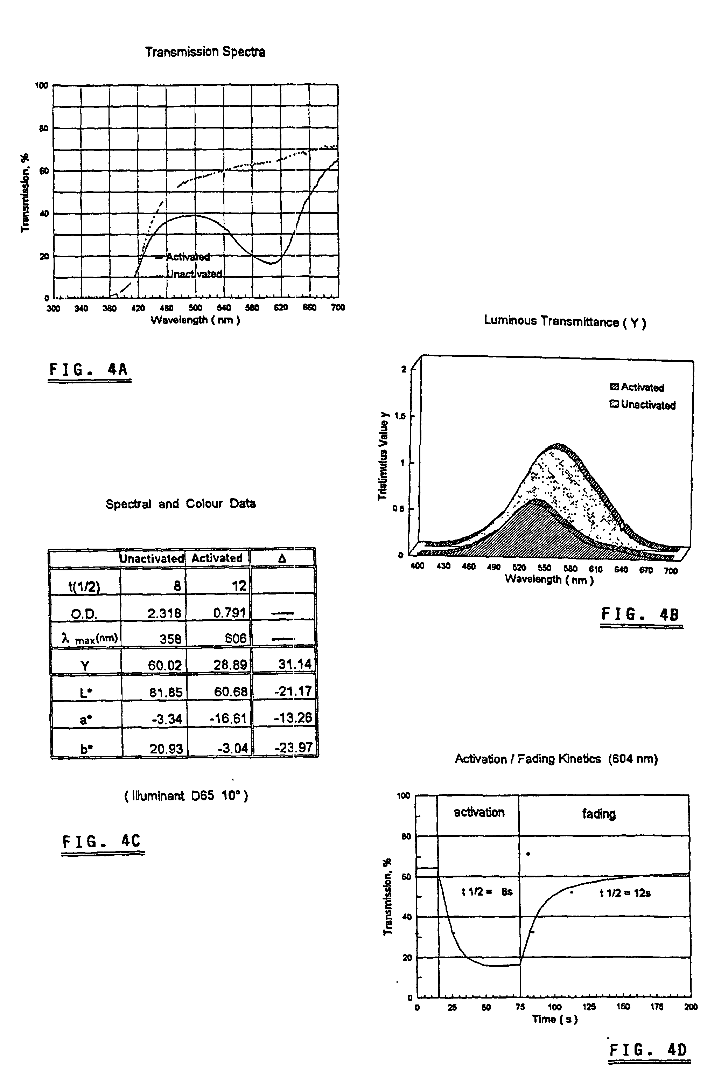

Lens samples realized according to example 1 and reference samples realized according to the comparative example 2, were subjected to an exhaustive series of tests and the results are summarized in Figures 3A, 3B, 3C and 3D for the photochromic samples with no carbon black dye, made according to the comparative example 2, and in Figures 4A, 4B, 4C and 4D for the samples of the present invention, made according to example 1.

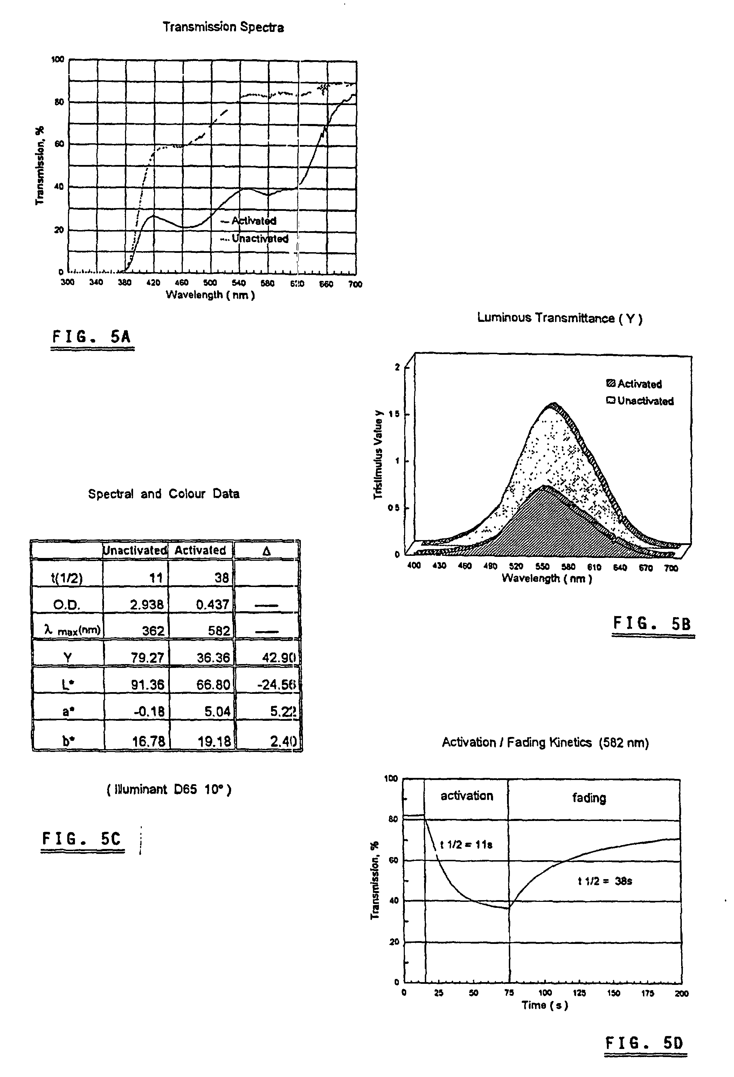

By comparing the relative figures, to an accentuated attenuation that extends also in the near-IR, shown by the samples of the invention made according to example 1, even the kinetics of activation/recovery of the photochromic behavior of the lenses appears to be enhanced by the presence of the dye of colloidal carbon particles. By way of comparison, Figures 5A, 5B, 5C and 5D show the characteristics of acrylic base, photochromic commercial products, that were made according to the disclosure contained in the above mentioned publication WO 95/04086.

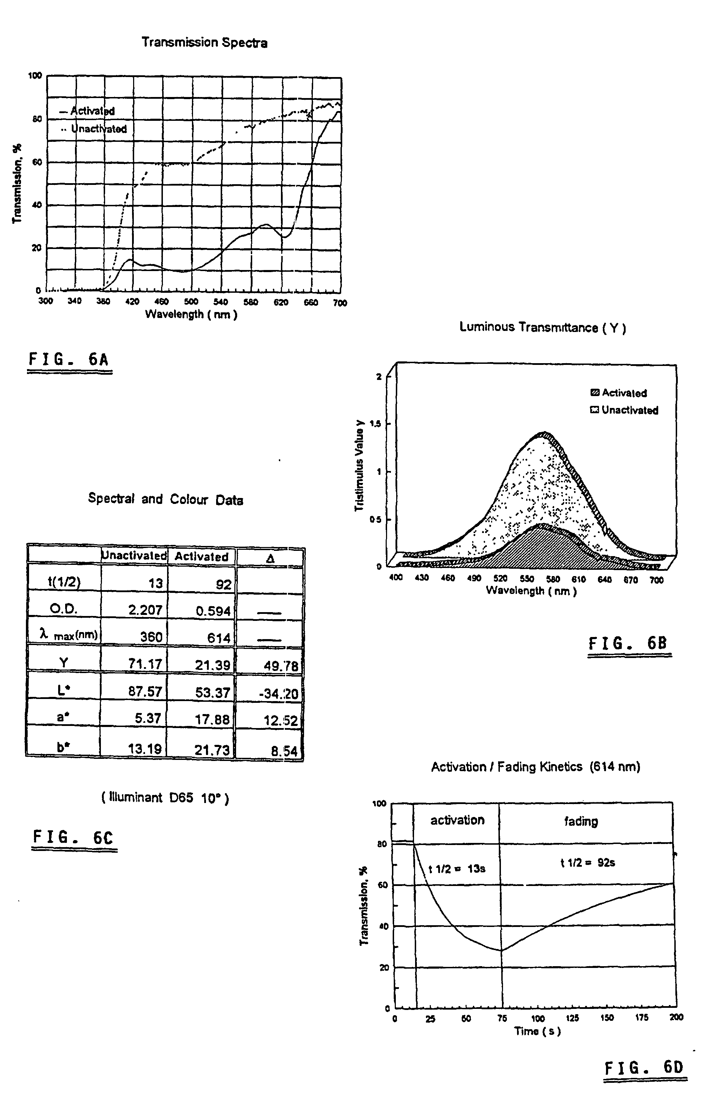

Moreover, Figures 6A, 6B, 6C and 6D show the characteristics of known photochromic lenses wherein the photochromic properties are imparted to the polymer after polymerization by immersion in a solution of photochromic compound followed by a heat treatment

The material object of the present invention reveals kinetic characteristics definitely better and practically hysteresis free as compared with materials made according to known techniques.

## Claims

1. A transparent material for sheets, screens and lenses having photochromic properties and filtering properties against radiations of the near-IR, consisting of a matrix of a thermosetting polymer containing homogeneously dispersed therein particles of a carbon black and at least a photochromic compound belonging to the group composed of spirooxazines and spiropyranols, **characterized in that** said particles of carbon black carry functional groups belonging to the group consisting of carboxylic groups, lactonic groups, phenolic groups and carbonylic group chemically bonded to the surface of carbon particles.

2. The transparent material according to claim 1, **characterized in that** the amount of said carbon black particles carrying said functional groups chemically bonded to the surface is within 0,001% and 0,003% by weight of the whole mixture.

3. The transparent material according to claim 1, **characterized in that** said photochromic compound is present in a percentage comprised between 0,05 and 0,2 of the whole weight of the mixture.

4. The transparent material according to claim 1, **characterized in that** said polymeric matrix is of an allyl diglycol carbonate.

5. The transparent material according to claim 4, **characterized in that** said polymeric matrix is a mixture of at least allyl (bis) diglycol carbonate and allyl (tris) diglycol carbonate.

## Patentansprüche

1. Durchsichtiges Material für Folien, Schirme und Linsen mit photochromischen Eigenschaften und mit Filtrationseigenschaften gegenüber die Strahlung des nahen infraroten Bereichs bestehend aus einer Matrize aus einem hitzehärtbaren, homogen dispergierte Teilchen eines Rußes und wenigstens einer photochromischen Verbindung aus der Gruppe Spirooxazine und Spiropyranole enthaltenden Polymer, **dadurch gekennzeichnet**, dass die genannte Russ Teilchen funktionelle chemisch an der Oberfläche der Russ Teilchen gebundene Gruppen tragen, die aus Carboxyl-, Lakton-, Phenol- und Carbonylgruppen ausgewählt sind.

2. Durchsichtiges Material nach Anspruch 1, **dadurch gekennzeichnet**, dass die Menge der genannten Russ Teilchen, die die genannte chemisch an der Oberfläche gebundene Gruppen tragen zwischen 0,001 und 0,003 Gew-% der gesamten Mischung beträgt.

3. Durchsichtiges Material nach Anspruch 1, **dadurch gekennzeichnet**, dass die genannte photochromische Verbindung in einer Menge von 0,05 % bis 0,2 % des Gewichtes der gesamten Mischung enthalten ist.

4. Durchsichtiges Material nach Anspruch 1, **dadurch gekennzeichnet**, dass die genannte polymerische Matrize aus einem Allyl-diglykol-carbonat besteht.

5. Durchsichtiges Material nach Anspruch 4, **dadurch gekennzeichnet**, dass die genannte polymerische Matrize eine Mischung aus wenigstens Allyl-(bis)diglykol-carbonat und Allyl-(tris)diglykol-carbonat ist.

## Revendications

1. Un matériau transparent pour feuilles, écrans, et lentilles, ayant des propretés photochromiques et des propretés filtrantes contre les radiations du voisin IR, composé d'une matrice d'un polymère thermodurcissable contenant des particules d'un noir de carbone et d'au moins un composé photochromique appartenant au groupe comprenant les spirooxazines et les spiropyranols homogènement dispersées à son intérieur, **caractérisé en ce que** lesdites particules de noir de carbone portent des groupes fonctionnels qui appartiennent au groupe comprenant les groupes carboxyliques, les groupes lactone, les groupes phénol, et les groupes carbonyle liés chimiquement à la surface des particules de carbone.

2. Matériau transparent selon la revendication 1, **caractérisé en ce que** la quantité desdites particules de noir de carbone portant lesdits groupes fonctionnels liés chimiquement à la surface est comprise entre 0,001% et 0,003% en poids du mélange complet.

3. Matériau transparent selon la revendication 1, **caractérisé en ce que** ledit composé photochromique est contenu avec un pourcentage compris entre 0,05 et 0,2 du poids total du mélange.

4. Matériau transparent selon la revendication 1, **caractérisé en ce que** ladite matrice polymère consiste enun allyle diglycol carbonate.

5. Matériau transparent selon la revendication 4, **caractérisé en ce que** ladite matrice polymère est un mélange d'au moins allyle (bis)diglycol carbonate et allyle (tris)diglycol carbonate.
